# EUROPEAN PATENT APPLICATION

(11) **EP 0 653 884 A1**
(43) Date of publication of application: **17.05.1995**
(21) Application number: 93870216.4
(22) Date of filing: 17.11.1993
(51) Int. Cl.: H04N 7/173

(54) **Interactive video on demand network**

(71) Applicant: BELL TELEPHONE MANUFACTURING COMPANY Naamloze Vennootschap, B-2018 Antwerp (BE)
(72) Inventor: Verhille, Henri Albert Julia, B-2960 Brecht (BE); Deloddere, Daniel, B-9150 Bazel (BE)

(57) **Abstract**

The interactive video on demand network is intended for a plurality of user stations (US11, ..., USNM) and includes a video server (VS) producing a plurality of delayed instances of a video signal for transmission to the user stations, and a buffer means (IB1, ..., IBN) to an input of which a selected one of these instances is applied and at an output of which a version of the video signal as requested by a said user station is provided. The buffer means generates the requested version under control of control signals issued by the user stations and selects the instance based on that requested version. The buffer means (IB1, ... IBN) is able to transmit a load request signal to the video server (VS) which in response thereat applies at least part of the video signal to the input of the buffer means for storage therein, at a rate substantially higher than real time. In this way the buffer means always contains at least that part of the video signal needed to provide to the user station the version it has requested for and to provide functions such as pause, (fast) forward, (fast) rewind and resume.

## Description

The present invention concerns an interactive video on demand network with a plurality of user stations and including a video server producing a plurality of delayed instances of a video signal for transmission to said user stations, and a buffer means to an input of which a selected one of said instances is applied and at an output of which a version of said video signal as requested by a said user station is provided, said buffer means under control of control signals issued by said user station generating said requested version and selecting said instance based on said requested version.

An interactive network of the above type is already known from the article "System architecture for a large scale video on demand service", by W. Sincoskie, Computer Networks and ISDN Systems 22, 1991, pp. 155-162. In the latter article the instances are referred to as phases and the buffer means as a stop/start buffer.

The article describes how a low cost interactive video service, more particularly a so called quasi-video on demand service can be provided which allows the user stations to view a video signal by using one of the mutually delayed video signal instances produced by the video server. As a consequence these user stations can neither start viewing at a moment of their choice since they have to wait until a delayed instance is produced, nor can they enjoy functions such as PAUSE, FAST FORWARD, REWIND, etc because the video signal instances are transmitted in a continouous way.

To provide an interactive service buffer means can be included in the network as mentioned in the article, thereby allowing a user station to view the user requested version of the video signal which needs neither be concurrent nor identical to any of the instances provided for the quasivideo on demand service. In particular, the user station may pause and resume viewing the video signal at any moment and may, to a limited extent, even visually rewind or fast forward within the video signal thanks to the fact that the video signal instances produced by the video server for transmission are buffered in the buffer means.

However, when using this known network as an interactive network, it appears to have a number of serious deficiencies which apparently up to now and to a large extent remained unnoticed. As described in more detail hereafter these deficiencies are accountable to the fact that the requested version of the video signal may only be generated by the buffer means by using the above buffered instances as provided by the video server.

It can be verified, and it is indeed one of the merits of the present invention to have appreciated this, that in a number of cases the interactive service realized by using the buffer means as in the known network, is reduced to the above mentioned quasi-video on demand service. Indeed, firstly, only requested versions starting concurrently with one of the instances may be provided by a network of the above known type, which means that upon request for a video signal version the user station has to wait for the start of a consecutive instance which can last up to the mutual delay between the various instances.

Furthermore, when the user station has not yet paused, it may only request a coarse rewind to at the most the beginning of the stored instance part and no fast forward since at that moment no part of the video signal further than the video signal position actually transmitted to the user station has been buffered yet. Such coarse operation has to be deemed unsatisfactory for an interactive user, all the more since it exactly corresponds to the service offered to a quasi-video on demand user. Finally, when a user station has paused for a while, his ability to perform a visual fast forward or rewind or a less coarse fast forward or rewind than to previously or subsequently started instances is very limited. Indeed, only the part of the video signal buffered after and before pausing can then be used for providing such fast forward and rewind operations respectively since, when performing a fast forward or rewind beyond this buffered portion it cannot be guaranteed that a correct instance is available to continue viewing. A user station may have to wait for such a correct instance to become available, but even then it would be impossible to fast forward beyond the buffered portion as long as there has been no pause, because no video signal part further than the video signal position actually transferred to the user station is then available in the buffer means.

It is an object of the present invention to provide an interactive network of the above type but wherein a full interactive service is provided for.

This object is achieved by virtue of the fact that said buffer means is able to transmit a load signal to said video server which in response thereat applies at least part of said video signal to said buffer means input for storage therein, at a rate substantially higher than real time.

Indeed, full interactive control is ensured by transmitting upon request from the buffer means and in response to the load signal from the buffer means a video signal part from the video server to the buffer means needed and not available therein, to transmit to the user stations the video signals requested. Moreover, such transmission has to be done at a rate faster than real time since otherwise the signal part transmitted to the buffer means could not be accumulated therein to perform the fast forward and rewind functions in an efficient way. Also, such a fast transmission is required to make a sufficient amount of buffered data available thereby requiring the use of only one selected instance where without a fast transmission and storage new instances would have to be used.

Summarizing, it can be said that by performing a substantially faster transmission and storage of a video signal part which is missing in the buffer means, sufficient freedom is given to the latter buffer means to again derive any part of a requested version as well as to again be filled with one of the delayed instances provided at realtime speed and by default. Such a faster transmission and buffering, which is for instance 100 times faster than the rate at which the video signal is normally displayed and 10 times faster than the rate of a fast forward or fast rewind operation, is invisible to the user so that the response to his request occurs to be instantaneous.

It is to be noted, that in the above way dedicated transmission for interactive users only takes place when the user performs control functions, e.g. start of view, fast forward, pause, rewind, the number of these operations being on average rather small taken over the total population of interactive users. Thereby only a small amount of extra bandwidth is needed in the network to be able to perform these operations. On the other hand, and as described in detail hereinbelow, the amount of fastly transmitted and stored data, hereafter also called fast load, allows to trade off this dedicated transmission to the buffer space required for the buffer means. Indeed, when fastly loading a larger amount of data, which requires a larger buffer space, the probability that later on a video position to be transmitted to the user station is not available in the buffer means is naturally reduced, thus reducing the dedicated transmission.

Another characteristic feature of the present invention is that one of said control signals is a start-of-view request signal, and that said buffer means upon receipt of said start-of-view request signal sends a said load request signal for at least the part of said video signal comprised between the beginning of said video signal and the video signal position actually transmitted in the one of said delayed instances last begun before receipt of said start-ofview request, said latter instance being applied to said buffer means input the latest at the moment a video signal position is transmitted in said latter instance that corresponds to a last video signal position of said stored part.

In this way, the user station may immediately after issuing the start-of-view request signal start displaying the video signal. Furthermore, the video signal may subsequently be transmitted for display without interruptions since the fastly loaded part extends at least until the position actually transmitted in the last begun instance, this instance being applied to the buffer means at the latest from the moment corresponding to the last position of the fastly loaded part, and thus inherently being available for being displayed when needed. Indeed, when the actually displayed position reaches the last position of the fastly loaded part, a time interval corresponding to the difference between this last position and the beginning of the video signal has elapsed, whereby the actually transmitted position of the said last begun instance naturally has elapsed beyond the last position of the fastly loaded part and thus is already being applied to the buffer means.

A specific interactive video on demand service is a pause service which by virtue of the present invention may be provided due to the fact that one of said control signals is a pause request signal, and that upon receipt thereof by said buffer means said selected instance is applied to said buffer means at least until the video signal part stored in said buffer means and starting from the video signal position transmitted at the moment said pause request signal was received has a length corresponding to a time interval at least equal to the time interval between the transmission of a said load request signal and the resulting storage of a said signal part.

Thus, when after the pause request viewing is resumed, enough time is available for performing a fast load, a waiting time before resuming or after a short viewing time thereby being avoided.

Another specific interactive video on demand service is a fast forward service which by virtue of the present invention may be provided due to the fact that one of said control signals is a fast forward request signal, and that, upon receipt of said fast forward request signal and each time the difference between a last video signal position stored in said buffer means and the video signal position actually being transmitted to said user station becomes lower than a predetermined threshold, said buffer means sends a said load request signal to said video server for part of said video signal starting at least from said last video signal position stored in said buffer means and with a length such that the difference between a last position of the latter part and said video signal position actually being transmitted to said user station corresponds to a time interval at least equal to the time interval between the transmission of a said load signal and the resulting storage of a said signal part.

In this way, the user station may perform a fast forward over the whole video signal and without interruptions. Indeed, since the fastly loaded parts are always chosen such that the contents of the buffer means at least ensure that the requested version may be provided to the user station during a time interval equal to the response time for a fast load, i.e. that the video signal may be provided in fast forward to the user station during this time interval, the predetermined threshold may always be so chosen that a further part of the video signal may be fastly loaded before the video signal position actually provided to the user station reaches the last video signal position stored in the buffer means. To be noted that the above applies to slow forward as well as to fast forward.

Still another specific interactive video on demand service is a rewind service which by virtue of the present invention may be provided due to the fact that one of said control signals is a rewind request signal, and that, upon receipt of said rewind request signal and each time the difference between the video signal position actually being transmitted to said user station and a first video signal position stored in said buffer means becomes lower than a predetermined threshold, said buffer means sends a said load request signal for part of said video signal ending with at least said first video signal position stored in said buffer means and with a length such that the difference between a first position of the latter part and said video signal position actually being transmitted to said user station corresponds to a time interval at least equal to the time interval between the transmission of a said load signal and the resulting storage of a said signal part.

In this way, the user station may perform a rewind over the whole video signal and without interruptions. Indeed, since the fastly loaded parts are always so chosen that the contents of the buffer means at least ensures that the user requested version may be provided to the user station during a time interval equal to the response time for a fast load, i.e. that the video signal may be provided in rewind to the user station during this time interval, the predetermined threshold may always be chosen such that a previous part of the video signal may be fastly loaded before the video signal position actually provided to the user station reaches the first video signal position stored in the buffer means. To be noted that the above applies to slow rewind as well as to fast rewind.

For each of the above specific interactive video on demand services - pause, fast forward, rewind - a resume to view is an important interactive feature which by virtue of the present invention may be provided due to the fact that one of said control signals is a resume request signal and that said buffer means sends on receipt of said resume request signal a said load signal for at least the part of said video signal comprised between a last video signal position stored in said buffer means and the video signal position actually transmitted in the one of said instances in which the video signal position at which said transmission of said user requested version is to be resumed, is last transmitted, said latter instance being applied to said buffer means at the latest from the moment a video signal position is transmitted in said latter instance that corresponds to a last video signal position of the latter part.

In this way, the user station may immediately after issuing the resume request signal resume displaying the video signal. Furthermore, the video signal may thereupon be displayed without interruptions since the fastly loaded part extends at least until the video signal position actually transmitted in the instance in which the resume video signal position was last transmitted, this instance being applied to the buffer means from the moment corresponding to the last video signal position of the fastly loaded part, and thus inherently being available for being displayed when needed. Indeed, when the actually displayed position reaches the last video signal position of the fastly loaded part, a time interval corresponding to the difference between this last position and the resume position of the video signal has elapsed, whereby the video signal position actually transmitted in the latter instance naturally has elapsed beyond the last position of the fast loaded part and thus is already being applied to the buffer means. To be noted that when the video signal position actually transmitted in the latter instance falls between the resume video signal position and the last video signal position stored in the buffer means no fast load needs be requested. Indeed, in that case the latter instance is available for being applied to the buffer means before the last video signal position stored therein is reached even without a fast load.

In a further embodiment of the present invention, upon a said storage having been performed, said part of said video signal stored in said buffer means extends around the video signal position at which said transmission of said user requested version to said user station is to be started or resumed, such that both the parts before and after the latter video signal position have a length corresponding at least to the time interval between the transmission of a said load signal and the resulting storage of a said signal part.

Thus, when a said start-of-view request signal or a said resume request signal is issued by the user station, the latter may immediately thereupon issue a fast forward request signal or a rewind request signal without this instantly giving rise to a fast load request signal. Furthermore, when such a fast forward request signal or a rewind request signal is issued later on by the user station, this also needs not give rise to an instant fast load request. Indeed, a user may fast forward or rewind freely within the video signal part stored in the buffer means without a fast load being needed, and a fast load request signal needs only be issued when upon advancing in the buffer means the difference between the last video signal position stored in this buffer means and the video signal position actually transmitted to the user station, or upon regressing in the buffer means the difference between the video signal position actually transmitted to the user station and the first video signal position stored in the buffer means, corresponds to the response time for a fast load or less. Since before as well as after the resume/start video signal position a video signal portion is provided with a length corresponding to at least the latter response time, a fast load need not be requested immediately.

An even further feature of the present invention is that the size of said buffer means is such that a said part of said video signal with a length at least equal to the sum of a length corresponding to the maximum delay between subsequent instances and a length corresponding to twice the time interval between the transmission of a said load signal and the resulting storage of a said signal part may be stored therein.

In this way, one may guarantee that no display interruptions are encountered once a start-of-view has been requested. Indeed, even when the user station issues a start-of-view request signal immediately after the beginning of an instance of the video signal, whereupon a fast load request for part of the video signal with a length equal to the sum of the subsequent instance delay and two fast load response times is transmitted, the buffer means contains a portion of the video signal large enough to allow for an immediate rewind since, as follows from the above, the video signal part stored in the buffer means before the actual transmission point at any time has a length minimally equal to the fast load response time. Furthermore, when, in case the begin position of the last begun instance has elapsed for less than the response time for a fast load, a fast load is performed for at least the part of the video signal comprised between the beginning of the video signal and the position actually transmitted by the previous instance, and this previous instance is then provided to the buffer means. An immediate fast forward is also allowed for since the video signal part stored in the buffer means after the actual transmission point has then at any time a length minimally equal to the fast load response time. The latter follows from the fact that the instance to be applied to the buffer means is applied thereto at last after a time interval equal to the subsequent instance delay, i.e. when at least a video signal portion with a length corresponding to the fast load response time remains available between the actually transmitted position and the end position of the buffer means.

In a further embodiment of the present invention, said buffer means includes buffer modules each of which is associated to at least one of said user stations.

Thus, when a user asks for an interactive video on demand service he always gets a buffer means at his disposal.

In another embodiment of the present invention, said buffer means includes a buffer arrangement part of which is allocated to a said user station upon request thereby.

In this way, a user only pays for an buffer means when being granted the use thereof. When the user does not want to pay for an buffer means, he may request the network to only provide him with one of the instances of the video signal when it becomes available. The user is then not able to perform functions as pause, fast forward or rewind, i.e. he is provided a quasi-video on demand service as already described above. To be noted that in this case, although the size of the buffer arrangement is dimensioned with respect to the percentage of the user population normally asking for an interactive video on demand network such that the chance of not being granted a buffer part because all parts of the buffer arrangement are allocated, is minimized, the latter chance remains obviously non-zero when the number of buffer parts able to be provided is less than the total number of users serviced by the video server and potentially asking for an interactive video on demand service.

A further feature of the present invention is that said video server constitutes a node of a communication system and is coupled to an access node thereof, a first and second set of ports of said access node being coupled to said buffer means and to said user stations respectively.

Thus, each user of the total number of users serviced by the access node may use one of the parts of the buffer arrangement, i.e. a statistical multiplexing of this total number of users over the buffer arrangement is performed so that a low chance for not being able to grant a buffer means is reached with only a small number of such buffer means.

Still another characteristic feature of the present invention is that said buffer arrangement includes a first plurality of separate memories, and that said allocated part includes parts of a second plurality of said separate memories.

Thereby, the allocated buffer part may be filled at a rate higher than the access rate of each of the separate memories provided the total amount of data applied to the allocated buffer part is distributed over the different separate memories of parts of which the allocated buffer part is constituted.

More specifically, a constraint for the access rate of the separate memories is that the access rate of a said separate memory is at least equal to the rate at which a said storage is performed divided by said second plurality.

The above mentioned and other objects and features of the invention will become more apparent and the invention itself will be best understood by referring to the following description of an embodiment taken in conjunction with the accompanying drawings wherein:
Fig 1 represents a first embodiment of an interactive video on demand network according to the present invention;
Fig 2 shows the structure of the buffer means IB1 of the interactive video on demand network of Fig. 1;
Fig 3 shows a detail of a second embodiment of an interactive video on demand network according to the present invention;
Figs 4 a to c show a timing diagrams to illustrate the interactive control of the video on demand network of Fig. 1 by a user station thereof.

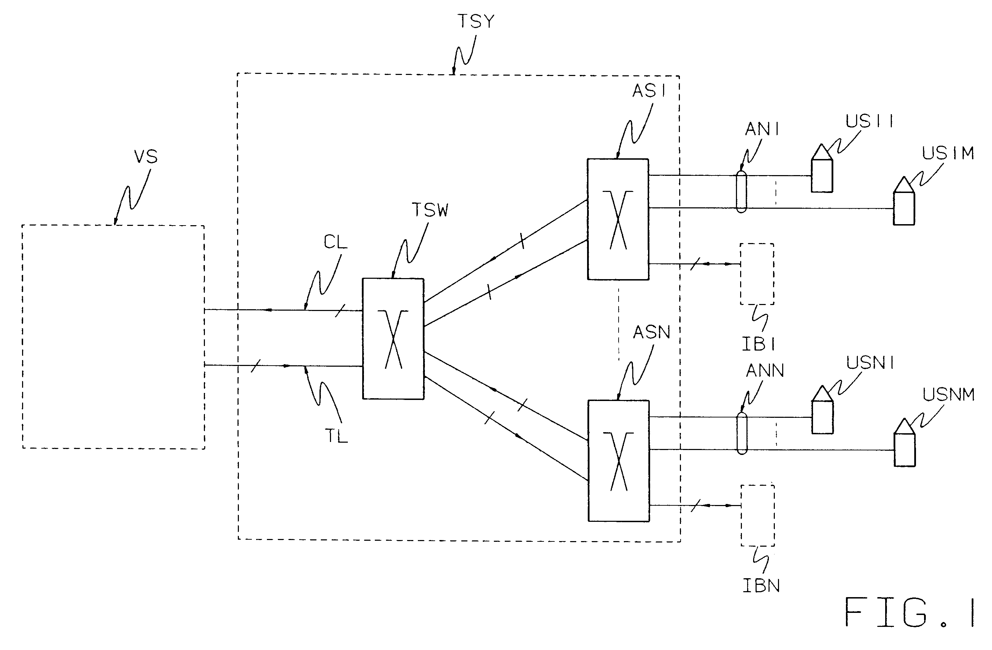

The interactive video on demand network shown in Fig 1 includes a communication system TSY used to transfer versions of video signals from a video server VS, wherein these video signals are stored on read/write random access memories, to terminals of this communication system TSY which are coupled either to buffer means IB1, .., IBN or to user stations US11, .., USNM.

The general operation principles of such a video on demand network with regard to the direct transfer of video signal versions, i.e. directly from the video server VS to the user stations US11, .., USNM, are described in applicant's pending and not yet published European patent applications 93870084.6 (Verbiest 10) and 93870085.3 (Voeten 5), the present video server having to be considered as a distributed video server in the sense of the latter applications. On the other hand, the video server VS and its operation principles are described in the applicant's copending European Patent application of even date entitled 'Video server' (Verhille 16). These operation principles and this video server VS are therefore not discussed in any detail here and the above pending applications are considered to be incorporated herein by reference.

Presently only the general architecture of the network is described and it is indicated in which general way the video signals are transferred from the video server VS to the terminals.

The communications system TSY of Fig. 1 includes a trunk switch TSW having a first set of ports connected via trunk lines TL to corresponding ports of the video server VS, video signal versions being retrieved from VS and video signals being stored therein via TL. TSW furthermore has a port connected via a control line CL to an interactive control port of the video server VS, interactive control signals being communicated to VS via CL. The trunk switch TSW is also coupled to each of N access switches AS1 to ASN (of which only AS1 and ASN are shown), via respective bidirectional trunk lines for transferring video signals and a number of control lines, from the access switches AS1..ASN to the trunk switch TSW to transfer interactive control signals.

The access switches AS1 to ASN are coupled to user stations US11, .., US1M to USN1, .., USNM via access lines AN1 to ANN respectively. These access lines are used to transfer video signals as well as interactive control signals, as is described in the above first mentioned pending patent application (Verbiest 10).

To be noted that the access lines AN1 to ANN could also be access networks and that the trunk switch could be coupled to AS1 to ASN via intermediate switches or so called cross-connects.

The access switches AS1 to ASN are furthermore connected to the buffer means IB1 to IBN respectively.

The communications system TSY may be any communication system able to carry video signals at least at realtime speed, based on any switching protocol, e.g. the Asynchronous Transfer Mode (ATM), the Synchronous Digital Hierarchy (SDH) or the Synchronous Optical Network (SONET) protocol, or may be any mix of Broadband Integrated Services Digital Network (B-ISDN) transport and switching systems. Likewise, the access networks AN1 to ANN may for instance be Asynchronous Passive Optical Networks (APON) as described in the pending European patent application 91870197.0 (Van der Plas 4) Asynchronous Digital Subscriber Loop (ADSL) access networks, or other arrangements.

The purpose of the interactive video on demand network is to provide so-called quasi video on demand services as well as full interactive video on demand services. For this purpose, for each video signal stored in the video server VS the latter may provide a number of delayed instances mutually delayed over an inter-instance delay of e.g. 5 minutes. These instances are only provided at the request of a user station. Furthermore, and as described later, in order to provide full interactive video on demand services, the network is also able to transfer parts of the video signals from VS to the buffer means IB1 to IBN at a rate substantially higher than the real time rate at which the video signal instances are usually applied to these buffer means, e.g. at a rate which is 50 times faster than real time so that a video signal part representing 5 minutes of film may be loaded in the buffer means in only 6 seconds.

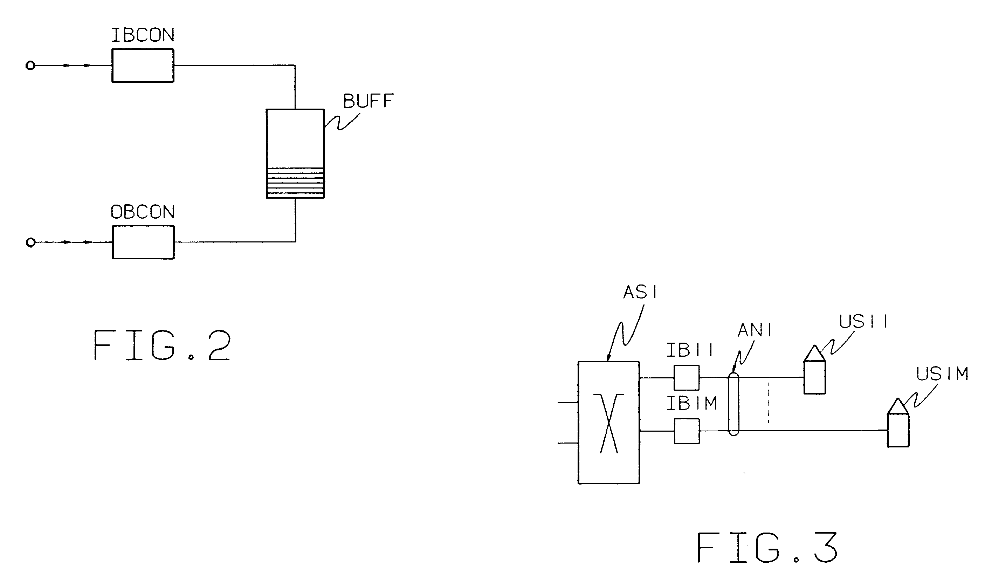

The structure of each of one of the buffer means IB1 is shown in Fig 2, the structure of the other buffer means being identical.

IB1 includes the series connection of an input convertor IBCON, a buffer BUFF and an output convertor OBCON. The input convertor IBCON is able to transfer to the video server VS and via the communication system TSY control signals indicating which instance of which video signal it wants to receive. IBCON is furthermore able to convert the format of such a received video signal to a format suitable for being stored in the buffer BUFF. Such a suitable format is for instance described in applicant's pending European patent application 93870086.1 (Voeten 6) and in the article "A system architecture for a large scale video on demand service", by W. Sincoskie, Computer Networks and ISDN Systems 22, 1991, pp. 155 - 162, and is therefore not described here in any detail.

The buffer BUFF is constituted by a solid state memory or an array of hard disks as described in the last mentioned pending patent application. A video signal may be read from this buffer under the control of the convertor OBCON, subsequent to the receipt therein of control signals from the user station to which this video signal is to be supplied. OBCON also converts the format of the video signal as stored in the buffer BUFF to a format suitable for being switched to the user stations via the access switch.

When a user station wants to receive a copy of one of the video signals stored in the video server VS with the purpose of displaying it on its television screen and wants full interactive control over this video signal version, a part of the buffer means, connected to the access switch to which the user station is connected, is allocated to this station, more specifically part of BUFF of the buffer means, e.g. of IB1, is allocated to user station US11. This allocation procedure is for instance executed by a not shown buffer controller forming part of the corresponding buffer means.

On the other hand, when a user station wants to display the video signal without full interactive control, no part of the corresponding buffer means is allocated to this user station.

Thus, a payment scheme may be established such that a user station only pays for full interactive video on demand when it actually uses it. On the other hand the number of buffer means required is function of the number of user stations effectively asking for a full interactive video on demand service. This number is for instance only 10 % of the total population of users of the video on demand service, to be served.

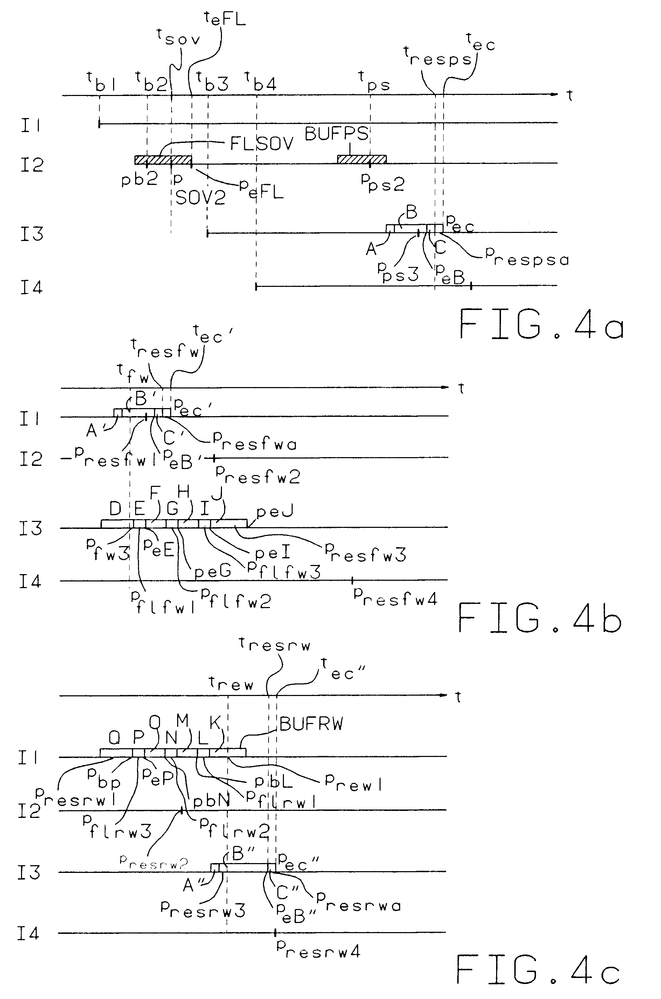

A detail of another embodiment of an interactive video on demand network according to the present invention is shown in Fig 3. Therein, buffer means IB11 to IB1M identical to IB1 are connected between the access network AN1 and the user stations US11 to US1M respectively, i.e. to each user station a separate buffer means is allocated. As a consequence, a user pays for the buffer means allocated to him also when he in fact does not require any interactive control over his video signal version, but he is always sure to obtain such interactive control when asking so.

The size of the part of the buffer BUFF allocated to a user station is such that a video signal part with a length equal to the sum of the already mentioned inter-instance delay and two times the time required to perform a fast load may be stored therein. Thus, for a 5 minutes inter-instance delay, a fast load time of 6 seconds and a normal display rate of 2 Mbit/s, the buffer size should be 624 Mbit. Thereby, display of the video signal without interruptions is guaranteed, as will be explained later.

The operation of the interactive video on demand network is now described by making reference to the Figs 1 to 3 and to Figs 4 a to c which represent timing diagrams of signals appearing in the network. More particularly, Figs 4 a to c show a time axis t and four consecutive instances I1 to I4 of a video signal which start at moments tb1 to tb4 respectively. As an example, these time moments are mutually delayed over a delay equal to 5 minutes.

To be noted that in the following BUFF is used to indicate the part of BUFF allocated to a user station.

When at a time moment tSOV a user station, e.g. US11, issues a start-of-view request signal indicating that it wants to start viewing a particular video signal, this request signal is communicated to the video server via the access lines AN1 and through the control lines of the communication system TSY. In this request signal the user station may for instance specify that it wants a quasi video on demand service, in which case it is bound to wait until time moment tb3, since the next instance of the video signal, viz. I3, only starts at that moment. From then on the user station may only display this instance I3 of the video signal in the way it is stored in VS, i.e. without having interactive control over it. On the other hand, in the request signal the user station may also specify it wants a full interactive video on demand service and in that case an available part of the buffer means IB1 is allocated to it as will be described later. To be noted that after a quasi video on demand service has started a user station may ask for a full interactive video on demand service even when it already displays the video signal.

Because the operation of a quasi video on demand service is known and already described in the above first mentioned pending patent application (Verbiest 10) it is not described in any detail here. In the following only the operation of full interactive video on demand will be considered.

In case a full interactive video on demand service is requested, a buffer means, viz. IB11 or part of IB1, is allocated to the user station US11. The start-of-view request signal is then supplied to the convertor OBCON of the buffer means, e.g. IB1. This converter then checks the contents of the buffer BUFF and for instance detects that no video signal part is stored therein. This is done by checking if the buffer location indicated by a read pointer of BUFF is the same as the buffer location indicated by a write pointer of BUFF. The fact that the buffer BUFF is empty is communicated to the convertor IBCON which thereupon issues a fast load request signal to the video server VS via the communication system TSY. This fast load request signal indicates to the video server VS that part of the video signal with a maximum length corresponding to about 5 minutes of displaying time - more exactly 5 minutes and 12 seconds - is to be supplied to the buffer means IB1 at a rate which is e.g. 50 times higher than the rate at which the video signal is normally displayed, i.e. e.g. 100 Mbit/s when the display rate is 2 Mbit/s. To be noted that the part of the video signal to be fastly loaded must at least extend from the beginning of the video signal to the point of the last begun video signal instance before the receipt of the start-of-view request, e.g. I2, wich is actually transmitted upon the receipt of the start-of-view request, i.e. from point pb2 to point pSOV2 indicated in Fig 4a. Thus point pSOV2 is not transmitted at the moment tSOV, but 6 seconds later since at the above fast transfer rate, 5 minutes of video signal require 6 seconds to be transmitted. In order that Fig 4 should remain reasonably clear, this time difference of 6 seconds is not shown therein. The fast loaded part of the video signal is indicated in Fig 4a by a hatched block FLSOV. The video signal may thus be transferred to the user station US11 and displayed therein only 6 seconds after the start-of-view request signal has been issued by this station. From the time moment teFL at which the point transmitted in the instance I2 reaches the last point of this part FLSOV, i.e. the point peFL, the convertor IBCON applies the instance I2 to the buffer BUFF. From then onwards the buffer is filled with the instance I2 via IBCON and the video signal is read from the buffer BUFF and applied to the user station US11 via the convertor OBCON.

To be noted that alternatively the video instance I2 can be applied to BUFF at the start of tsov, so that I2 is stored simultaneously with the fast load.

It is to be noted that a display without interruption of the video signal is thus guaranteed after a start-of-view request signal has been issued.

Provided that the distance from the write pointer to the read pointer, in the writing direction is large enough, a rewind can be performed upon request by the user station, i.e. the read pointer can be brought back to an already read part of the video signal. If the above distance corresponds to a rewind time of at least 6 seconds, then a previous video signal part already read but afterwards overwritten can be retrieved by means of a fast load operation.

The same reasoning can be applied to the performance upon request from a user station for a fast forward action. Indeed, provided the distance in BUFF from the read pointer to the write pointer in the writing direction corresponds to a fast forward time of at least 6 seconds then a subsequent video signal not yet stored in the buffer can be retrieved by a fast load operation so that the read pointer can then be displaced to any subsequent part in time of the video signal whether already present in BUFF or still to be provided by means of a fast load operation.

When a start-of-view request signal is issued by a user station for instance 1 second after tb2 and part of the video signal starting from the beginning thereof is loaded whereopon instance I2 is applied to the buffer, then the distance from the read pointer to the write pointer in the writing direction is 1 second which is less than 6 seconds so that there is no possibility to provide the fast forward service over more than 1 second. Therefore instance I1 is considered to be applied to the buffer input and thus a video signal part of 5 minutes and 1 second from the beginning thereof is loaded. As a result the above distance now equals 5 minutes and 1 second. The above implies that the length of BUFF has to at least equivalent to 5 minutes and 6 seconds.

However, in the above case and supposing that the length of BUFF is equivalent to 5 minutes and 6 seconds, the distance in time from the the write pointer to the read pointer in the writing direction is only 5 seconds which implies problems for providing the rewind service. This problem is solved in the considered case by extending the capacity of BUFF with the equivalent of 1 second. More generally the capacity of BUFF has thus to be at least equivalent to 5 minutes and 12 seconds.

When after some displaying time has elapsed the user station wants a pause in this display, it issues a pause request signal to the convertor OBCON of IB1, e.g. at a time tps. OBCON transmits this pause request signal to the convertor IBCON and the latter then keeps filling the buffer BUFF with video signal parts related to the instance I2 until a video signal part is available between the read and the write pointers of BUFF which corresponds to a predetermined display time, e.g. of 3 minutes, this video signal part being displayed at a normal display rate.

To be noted that in this way also a video signal part corresponding to 2 minutes and 12 seconds of display time is still available before the read pointer, i.e. the user station US11 may request rewinding the video signal within a time equivalent of 2 minutes and 12 seconds.

The video signal parts stored in the buffer BUFF before and after the read pointer should be such that the user station US11 may fast forward or rewind therein during at least a time interval needed for the performance of a new fast load operation. In this way, the user station may indeed after a pause in the displaying immediately start rewinding or fast forwarding as will be described later, without having to wait for a fast load to be performed. The video signal part finally stored in the buffer BUFF is indicated by a hatched part BUFPS in Fig 4a.

To be noted that the points pps2 and pps3 indicate same video signal points in different video signal instances I2 and I3, as is also the case for points presfw1, presfw2, presfw3 and presfw4 with relation to I1 to I4 (Fig 4 b), and the points presrw1, presrw2, presrw3 and presrw4 (Fig 4 c) discussed further.

When at a time tresps (Fig 4 a) the user station US11 issues a resume request signal to OBCON of IB1 indicating it wants to resume the display of the video signal, OBCON transmits this request signal to IBCON. The latter then compares the point of the video signal last stored in the buffer BUFF, viz. peB which corresponds to the end part of BUFPS, and the point of the video signal transferred to the user station US11 at the moment of the pause request, viz. pps2, with the points actually transmitted in the different instances. When one of these actually transmitted points, e.g. of instance I3, lies between the point pps2, corresponding with pps3, and the point peB, no fast load is needed. Indeed, in that case display is resumed and instance I3 is supplied to the buffer BUFF from the moment the point transmitted therein reaches peB. This case is not shown in Fig 4 a.

On the other hand, when as shown in Fig 4a, none of the actually transmitted points lies between pps2 and peB since prespsa which corresponds with tresps lies further than peb, then a fast load request signal is issued to the video server VS for a video signal part at least extending from the point peB to the actually transmitted point of the one of the instances for which this video signal part may be a minimum. It can be easily verified from Fig 4a that the latter instance is the one in which the point where display of the video signal is to be resumed, was last transmitted. Thus, a part C extending from peB to point peC is fast loaded so that after the fast load the buffer BUFF contains a part B + C, instead of the part A + B which was stored in BUFF before this fast load whereby A is overwritten by C, i.e. a part which is equal to BUFPS. The instance I3 is then from the moment teC on supplied to the buffer BUFF.

When at a moment tfw the user station US11 wants to start a fast forwarding of the video signal it issues a fast forward request signal to OBCON. The latter thereupon transmits this request signal to IBCON and starts reading the buffer BUFF at a fast forward rate which is e.g. five times faster than the normal display rate, i.e. 10 Mbit/s for a normal display rate of 2 Mbit/s. Actually, the displayed rate is at all times 2Mbit/s in this example, but the readpointer can skip some info such that the virtual read rate is e.g. 10Mbit/s. Since the buffer is now emptied at a rate five times higher than the rate it is filled with, it slowly runs empty. When the difference in distance between the read pointer of BUFF and the write pointer of BUFF in the writing direction reaches a predetermined minimum value a fast load request signal is issued to the video server VS for a subsequent video signal part. As indicated in Fig 4 b, when the read pointer of BUFF reaches the point pflfw1, a fast load request signal is issued to the video server VS for a portion F + G of the video signal so that after this fast load a video signal part E + F + G is stored in the buffer BUFF, instead of D + E which was stored in BUFF before the fast load.

Likewise, when the read pointer then reaches the point pflfw2, a fast load request is issued for a portion H + I, so that a video signal G + H + I is then stored in BUFF, and when the read pointer reaches the point pflfw3, a fast load request is issued for a portion J, so that a video signal I + J is then stored in BUFF. The points pflfw1, pflfw2 and pflfw3 are such that the video signal part needed to respond to a fast forward from the user station US11 is available in the buffer BUFF during at least a time interval needed for a new fast load to be performed, so that the user station US11 may continously, i.e. without intermediate waiting times, perform a fast forward action in the video signal. In other words, the video signal parts extending from pflfw1 to the point peE, from pflfw2 to the point peG and from pflfw3 to the point peI should correspond to e.g. at least 5 seconds of fast forward time so that, with the above display and load rates, a fast load for 250 seconds of normal display time or 50 seconds of fast forward time may be performed.

When at a time tresfw the user station wants to resume the normal display of the video signal after the fast forward, it issues a resume request signal to OBCON of IB1 which communicates this request signal to IBCON. The read pointer of BUFF has then advanced for instance as far as the point presfw3. Similar to the resuming after a stop request signal, IBCON then compares the point of the video signal at which display is to be resumed, viz. presfw3, and the point of the video signal last stored in the buffer BUFF, viz. peJ, to the points actually transmitted in the different instances. When one of these actually transmitted points, e.g. of instance I1, lies between presfw3 and peJ, no fast load request has to be issued. The user station may resume displaying the video signal and the instance I1 is supplied to the buffer BUFF from the moment it reaches the point peJ. This case is not shown in Figs 4 b.

On the other hand, as shown in Fig 4 b, when none of the actually transmitted points lies between presfw3 and peJ, a fast load request signal is issued to the video server VS for a part of the video signal at least extending from peJ to the point actually transmitted by the one of the instances in which the point at which display of the video signal is to be resumed was last transmitted, i.e. instance I1. Thus, a fast load request signal for a part C' of the video signal is issued to VS so that after this fast load a part B' + C' is stored in BUFF instead of the part A' + B' stored in BUFF before the fast load and equal to the part I + J. The fast loaded video signal part C' must at least extend from peJ, which is equal to peB', to presfwa, which is the actually transmitted point of instance I1 at the moment tresfw the resume request was issued. The instance I1 is supplied to the buffer BUFF from the moment the point last stored in the buffer BUFF, viz. peC', is transmitted therein, i.e. from the moment teC' on.

When at a moment trew the user station US11 wants to start rewinding in the video signal it issues a rewind request signal to OBCON. The latter thereupon transmits this request signal to IBCON and starts reading the buffer BUFF in backward direction. To be noted that this may done at a rewind rate which is equal to the normal display rate, but which may also be faster then this normal display rate, e.g. five times faster than the normal display rate, i.e. 10 Mbit/s for a normal display rate of 2 Mbit/s. Actualy, the displayed rate is at al times 2Mbit/s in this example, but the readpointer can skip some information such that the virtual read rate is e.g. 10 Mbit/s. Since the buffer BUFF is now read in backward direction, the read pointer approaches the write pointer, i.e. BUFF slowly runs empty. When the difference between both these pointers of BUFF reaches a predetermined minimum value, a fast load request signal is issued to the video server VS for a previous video signal part. As indicated in Fig 4 c, when the read pointer of BUFF reaches the point pflrw1, a fast load request signal is issued to the video server VS for a portion N + M of the video signal so that after this fast load a video signal part N + M + L is stored in the buffer BUFF, instead of L + K which was stored in BUFF before the fast load. Likewise, when the read pointer then reaches the point pflrw2, a fast load request signal is issued for a portion P + O, so that a video signal P + O + N is then stored in BUFF, and when the read pointer reaches the point pflrw3, a fast load request signal is issued for a portion Q, so that a video signal Q + P is then stored in BUFF. The points pflrw1, pflrw2 and pflrw3 are such that the video signal part needed to respond to a rewind from the user station US11 is available in the buffer BUFF at least during a time interval needed for a new fast load to be performed so that the user station US11 may continously, i.e. without intermediate waiting times, rewind through the video signal. In other words, the video signal parts extending from the point pbL to pflrw1, from the point pbN to pflrw2, and from the point pbP to pflrw3 should correspond to e.g. at least 5 seconds of rewind time so that, with the above display and load rates, a fast load for 250 seconds of normal display time or normal rewind time or 50 seconds of fast rewind time may be performed.

When at a time tresrw the user station wants to resume the normal display of the video signal after the rewind action, it issues a resume request signal to OBCON of IB1 which transmits this request to IBCON. The read pointer of BUFF has then gone back for instance as far as the point presrw1. IBCON then, in a way similar to that described above with respect to the display resume after a stop or a forward request, compares the point of the video signal at which display is to be resumed, viz. presrw1, and the point of the video signal last stored in the buffer BUFF, viz. peP, to the points actually transmitted in the different instances. When one of these actually transmitted points, e.g. of instance I3, lies between presrw1 and peP, no fast load request has to be issued. The user station may resume displaying the video signal and the instance I3 is supplied to the buffer BUFF from the moment it reaches the point peP. This case is not shown in Fig 4 c.

On the other hand, as shown in Fig 4 c, when none of the actually transmitted points lies between presrw1 and peP, a fast load request signal is issued to the video server VS for a part of the video signal at least extending from peP to the point actually transmitted by the one of the instances in which the point at which display of the video signal is to be resumed was last transmitted, i.e. instance I3. Thus, a fast load request signal for a part C'' of the video signal is issued to VS so that after this fast load a part B'' + C'' is stored in BUFF instead of the part A'' + B'' stored in BUFF before the fast load and equal to the part Q + P. The fast loaded video signal part C'' must at least extend from peP, which is equal to peB'', to presrwa, which is the actually transmitted point of instance I3 at the moment tresrw when the resume request was issued. The instance I3 is supplied to the buffer BUFF from the moment the point last stored in the buffer BUFF, viz. peC'', is transmitted therein, i.e. from the moment teC'' on.

To be noted that BUFF can be realized as a first plurality of separate memories where the part of BUFF allocated to a user station includes a subset of these parts distributed over a second plurality of the memories. Thereby the allocated buffer part may be filled at a rate higher than the access rate of each of the separate memories.

While the principles of the invention have been described above in connection with specific apparatus, it is to be clearly understood that this description is made only by way of example and not as a limitation on the scope of the invention.

## Claims

1. Interactive video on demand network with a plurality of user stations (US11, ..., USNM) and including a video server (VS) producing a plurality of delayed instances of a video signal for transmission to said user stations, and a buffer means (IB1, ..., IBN) to an input of which a selected one of said instances is applied and at an output of which a version of said video signal as requested by a said user station is provided, said buffer means under control of control signals issued by said user station generating said requested version and selecting said instance based on said requested version, characterized in that said buffer means (IB1, ... IBN) is able to transmit a load request signal to said video server (VS) which in response thereat applies at least part of said video signal to said buffer means input for storage therein, at a rate substantially higher than real time.

2. Interactive video on demand network according to claim 1, characterized in that one of said control signals is a start-of-view request signal, and that said buffer means (IB1, ..., IBN) upon receipt of said start-of-view request signal sends a said load request signal for at least the part of said video signal comprised between the beginning (pb2) of said video signal and the video signal position (pSOV2) actually transmitted in the one of said delayed instances (I2) last begun before receipt of said start-of-view request, said latter instance being applied to said buffer means input the latest at the moment a video signal position is transmitted in said latter instance that corresponds to a last video signal position of said stored part.

3. Interactive video on demand network according to claim 1, characterized in that one of said control signals is a pause request signal, and that upon receipt thereof by said buffer means (IB1, ..., IBN) said selected instance (I2) is applied to said buffer means at least until the video signal part stored in said buffer means and starting from the video signal position (pps2) transmitted at the moment said pause request signal was received has a length corresponding to a time interval at least equal to the time interval between the transmission of a said load request signal and the resulting storage of a said signal part.

4. Interactive video on demand network according to claim 1, characterized in that one of said control signals is a fast forward request signal, and that, upon receipt of said fast forward request signal and each time the difference between a last video signal position stored in said buffer means (IB1, ..., IBN) and the video signal position actually being transmitted to said user station becomes lower than a predetermined threshold, said buffer means sends a said load request signal to said video server (VS) for part of said video signal starting from at least said last video signal position stored in said buffer means and with a length such that the difference between a last position of the latter part and said video signal position actually being transmitted to said user station corresponds to a time interval at least equal to the time interval between the transmission of a said load signal and the resulting storage of a said signal part.

5. Interactive video on demand network according to claim 1, characterized in that one of said control signals is a rewind request signal, and that, upon receipt of said rewind request signal and each time the difference between the video signal position actually being transmitted to said user station (W11, ... USNM) and a first video signal position stored in said buffer means (IB1, ..., IBN) becomes lower than a predetermined threshold, said buffer means sends a said load request signal for part of said video signal ending with at least said first video signal position stored in said buffer means and with a length such that the difference between a first position of the latter part and said video signal position actually being transmitted to said user station corresponds to a time interval at least equal to the time interval between the transmission of a said load signal and the resulting storage of a said signal part.

6. Interactive video on demand network according to either one of claims 3, 4 or 5, characterized in that one of said control signals is a resume request signal and that said buffer means (IB1, ..., IBN) sends on receipt of said resume request signal a said load signal for at least the part of said video signal comprised between a last video signal position stored in said buffer means and the video signal position actually transmitted in the one of said instances in which the video signal position at which said transmission of said user requested version is to be resumed, is last transmitted, said latter instance being applied to said buffer means at the latest from the moment a video signal position is transmitted in said latter instance that corresponds to a last video signal position of the latter part.

7. Interactive video on demand network according to claim 2, characterized in that upon a said storage having been performed, said part of said video signal stored in said buffer means (IB1, ..., IBN) extends around the video signal position at which said transmission of said user requested version to said user station (US11, ..., USNM) is to be started, such that both the parts before and after the latter video signal position have a length corresponding at least to the time interval between the transmission of a said load signal and the resulting storage of a said signal part.

8. Interactive video on demand network according to claim 6, characterized in that upon a said storage having been performed, said part of said video signal stored in said buffer means (IB1, ..., IBN) extends around the video signal position at which said transmission of said user requested version to said user station is to be resumed, such that both the parts before and after the latter video signal position have a length corresponding at least to the time interval between the transmission of a said load signal and the resulting storage of a said signal part.

9. Interactive video on demand network according to claim 1, characterized in that the size of said buffer means is such that a said part of said video signal with a length at least equal to the sum of a length corresponding to the maximum delay between subsequent instances and a length corresponding to twice the time interval between the transmission of a said load signal and the resulting storage of a said signal part may be stored therein.

10. Interactive video on demand network according to claim 1, characterized in that said buffer means includes buffer modules (IB11, ..., IB1N) each of which is associated to at least one of said user stations (US11, ..., US1N).

11. Interactive video on demand network according to claim 1, characterized in that said buffer means includes a buffer arrangement (BUFF) part of which is allocated to a said user station upon request thereby.

12. Interactive video on demand network according to any of the previous claims, characterized in that said video server (vs) constitutes a node of a communication system and is coupled to an access node thereof, a first and second set of ports of said access node being coupled to said buffer means and to said user stations respectively.

13. Interactive video on demand network according to claim 11, characterized in that said buffer arrangement includes a first plurality of separate memories, and that said allocated part includes parts of a second plurality of said separate memories.

14. Interactive video on demand network according to claim 13, characterized in that the access rate of a said separate memory is at least equal to the rate at which a said storage is performed divided by said second plurality.
